(19) Europäisches Patentamt
European Patent Office
Office européen des brevets

(11) Publication number : **0 403 700 B1**

(12) **EUROPEAN PATENT SPECIFICATION**

(45) Date of publication of patent specification : **05.08.92 Bulletin 92/32**

(51) Int. Cl.$^5$ : **B01J 20/32**

(21) Application number : **89306229.9**

(22) Date of filing : **20.06.89**

(54) **Polyethyleneimine matrixes for affinity chromatography.**

(43) Date of publication of application : **27.12.90 Bulletin 90/52**

(45) Publication of the grant of the patent : **05.08.92 Bulletin 92/32**

(84) Designated Contracting States : **AT BE CH DE FR GB IT LI LU NL SE**

(56) References cited :
**EP-A- 0 239 079**
**EP-A- 0 316 492**
**WO-A-87/06586**
**US-A- 4 540 486**
**US-A- 4 551 245**
**US-A- 4 560 704**

(73) Proprietor : **J.T. Baker Inc.**
**222 Red School Lane**
**Phillipsburg, New Jersey 08865 (US)**

(72) Inventor : **Crane, Laura J.**
**Crane's Lane At Mill Run P.O. Box 124**
**Buttzville, N.J. 07829 (US)**
Inventor : **Kakodkar, Sunil V.**
**889 Blair Road**
**Bethlehem Pennsylvania 18017 (US)**

(74) Representative : **Perry, Robert Edward et al**
**GILL JENNINGS & EVERY 53-64 Chancery Lane**
**London WC2A 1HN (GB)**

EP 0 403 700 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

This invention relates to the field of affinity chromatography and immobilized enzymes and to affinity matrixes for use in affinity chromatography.

### BACKGROUND OF THE INVENTION

Affinity chromatography is a separation and purification technique that is based upon a unique and fundamental biological property of biological molecules, namely their selective, specific high-affinity recognition of and reversible molecular interaction with other molecules. Most biological macromolecules have a substrate or functional binding site for a specific ligand or an effector molecule, which itself may be another protein.

In general, a specific ligand is covalently attached to a solid support matrix. A sample containing the biological molecule which will specifically bind (absorb) to the immobilized ligand is brought into contact with the immobilized ligand. After unabsorbed and contaminating molecules are removed, the specifically bound molecule is eluted from the solid support by disrupting the specifically bound molecule-ligand interaction by one of several procedures, such as by changing the ionic strength or pH of elution buffers.

By this procedure, immobilized drugs, vitamins, peptides, hormones and the like may be used to isolate corresponding receptors or transport proteins. Immobilized protein can serve to isolate other complementary or interacting proteins. Similarly, such a procedure can be used to separate particulate biological specimens, such as cell membranes and even intact cells bearing specific receptors. Use of such a procedure is also useful to purify polynucleotides, antigens, antibodies, virus, enzymes and the like. In addition, such solid based affinity support matrixes have been utilized to immobilize enzymes for use in reactions as catalysts and the like.

Heretofore, the most widely used solid matrixes for affinity chromatography have been polysaccharide based matrixes, such as agarose, cellulose and crosslinked dextrin, although crosslinked polyacrylamides and silica or microporous glass beads have also been used.

However, with most such solid matrixes and especially with silica based solid matrixes, the solid base material is not sufficiently shielded from the molecules in the biological sample of interest with the result that non-specific binding, in the nature of absorption with materials other than the specific binding partner of the immobilized ligand, occurs. With the silica bases solid matrixes heretofore utilized strong hydrogen bonding and absorption at silanol groups occurs and is disruptive of the process. Moreover, the aqueous solutions that must be employed with the proteins or other biological material of interest cause undesirable hydrolysis of the silica matrixes, leaching undesirable material from the matrixes, resulting in unstable matrixes.

With the heretofore used solid support matrixes employed in affinity chromatography one could generally only use such supports for 200 to 300 hours in aqueous solutions and even less in acid or alkaline pH environments. Furthermore, such prior art matrixes could not tolerate any exposure to 0.1M NaOH.

Thus, the development of affinity chromatography has been inhibited to a great extent by these drawbacks of the presently used solid support matrixes, particularly due to the absorption of non-specific materials and instability of the matrixes.

It is therefore desirable that solid support matrixes for affinity chromatography be provided which eliminate or substantially reduce the risk of non-specific binding and which are stable under a variety of pH conditions and in aqueous solutions.

### SUMMARY OF THE INVENTION

It has now been discovered that covalently bound, non-crosslinked polyethyleneimine silica based solid phase supports provides affinity chromatography matrixes that are of greatly improved stability in aqueous, acid and alkaline environments and substantially reduce or virtually eliminate absorption of non-specific molecules. The covalently bound, non-crosslinked polyethyleneimine silica based solid supports employed to provide the affinity chromatography matrixes of this invention are the reaction products of polyethyleneiminopropyl trimethoxy silane with particulate silica gel or particulate controlled pore glass and is designated by the formula

Silica-PrSi-PEI.

The term Silica-PrSi-PEI as used in this invention means the covalently bound, non-crosslinked polyethyleneimine bonded phase solid support which is the reaction product of (1) either a) particulate silica gel having an average particle diameter of from 1 to 200, preferably 3 to 70, microns and an average pore size of from 0 to 100 nm (0 to 1000 Å) preferably 5 to 100 nm (50 to 1000 Angstrom units), or b) particulate controlled

pore glass having an average particle diameter of from about 1 to about 200 microns and an average pore size of from 0, preferably (40, to 1000 Angstrom units), with (2) polyethyleneiminopropyl trimethoxy silane having an average molecular weight of from 400 to 1800, or the weakly acidic carboxylated product thereof with a dibasic acid anhydride, said carboxylated product containing from 0.3 to 1.2 carboxyl milliequivalents per gram. Such Silica-PrSi-PEI products, their carboxylated derivatives and their preparation are disclosed and claimed in U.S. Patent 4,540,486 of Hugh Ramsden, issued September 10, 1985. Such products are currently available from J.T. Baker Inc. as BAKERBOND^R column chromatography matrixes.

The affinity chromatography matrixes of this invention are derivatized Silica-PrSi-PEI matrixes in which the primary and secondary amino groups of the polyethyleneimine moiety are reacted with a reactive moiety which is capable of forming covalent linkages with ligands under non-denaturing conditions and is stable under aqueous hydrolytic buffer conditions.

Thus, affinity chromatography matrixes of this invention may be represented by the generalized formula

$$\text{Silica-PrSi-PEI}\{(R)_x$$

where R in the case of the non-weakly acidic carboxylated support is the residue of any chemically reactive moiety capable of undergoing nucleophilic substitution at two separate sites, such that R becomes covalently linked to the primary or secondary amino groups of the PEI at one such site while having the other site available and reactive for subsequent nucleophilic substitution under non-denaturing conditions by an affinity chromatography ligand to form a second covalent bond stable under aqueous hydrolytic buffer conditions and x is a positive integer less than or equal to the total number of primary or secondary amino groups in the PEI moiety, and in the case of the weakly acidic carboxylated support R is the residue of any chemically reactive moiety capable of facilitated nucleophilic displacement of the carboxyl hydroxyl to form a covalent bond at the carboxyl carbon, creating thereby a sufficiently electrophilic site, so as to be readily displaced at the carboxyl carbon by a nucleophilic functional group on an affinity chromatography ligand and x is a positive integer less than or equal to the total number of carboxyl groups in the carboxylated PEI moiety. As examples of R residues of moieties reactive with the primary and secondary amino or carboxyl groups of the PEI moiety and meeting the other aforementioned conditions there may be mentioned the residues:

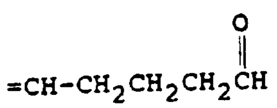 , 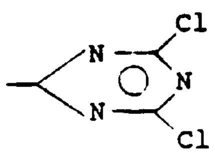 , 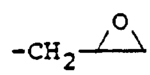 ,

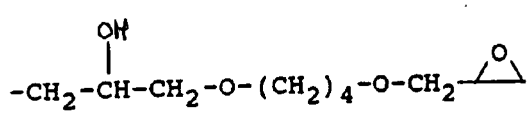 , 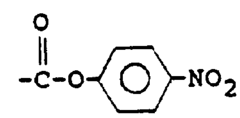 ,

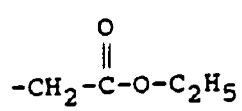 , 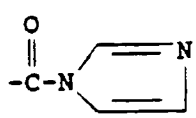 , 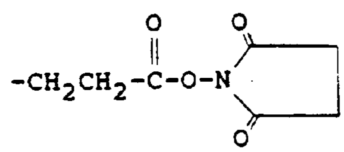

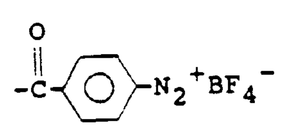 and 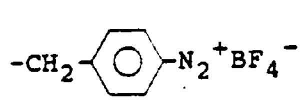 ,

which are derived from: glutaraldehyde, cyanuric chloride, epichlorohydrin, 1,4 butanediol diglycidyl ether, p-nitrophenyl chloroformate, ethylchloroacetate, 1,1′-carbonyldiimidazole, diazotized p-nitrobenzaldehyde fluoborate salt and diazotized p-nitrobenzoyl chloride fluoborate salt, respectively.

The affinity matrixes of this invention can be used for binding to any ligand which covalently bonds to the affinity matrix. The affinity matrix is especially useful for reacting with ligands having reactive amino groups although it is also quite useful for reacting with ligands having other reactive groups such as, for example,

ligands containing reactive hydroxyl, sulfhydryl and the like groups. The affinity matrixes of this invention readily react with such reactive groups of a protein, enzyme or other such ligand to yield the ligand immobilized on the affinity matrix. As examples of ligands containing such reactive groups which can be immobilized on the affinity matrixes of this invention by covalent binding thereto, there can be mentioned, for example, antigens, antibodies, enzymes, inhibitors, cofactors, hormones, vitamins, toxins, growth factors, glycoconjugates, lectins, nucleic acids and proteins which are known in the art, such as disclosed in Parikh, I. et al., Affinity Chromatography, C&EN, 17-24,32, August 26, 1985. The ligand bound affinity matrixes of this invention are employed to purify or separate substances, such as, for example, proteins from solutions containing such substances by binding or adsorbing the substance in solution with an affinity matrix of this invention having a ligand covalently bound to the affinity matrix. Among such substances to be separated or purified there can be mentioned, for example, enzymes, receptors, antibodies, antigens, nucleic acids and the like.

In addition, the affinity matrixes of this invention can be used to immobilize enzymes, either as ligands for affinity chromatography, as mentioned hereinbefore, or as immobilized enzymes for use as reaction catalysts. Such immobilized enzymes, immobilized on the affinity matrixes of this invention, are highly active and stable catalysts and retain their appropriate specificity. Such immobilized enzyme catalysts can be reused, permit continuous reactions, provide better reaction control and result in higher purity and yield of products. Moreover, such immobilized enzyme catalysts will generally result in less pollution due to reduction or elimination of the loss of enzyme catalyst. The use of such immobilized enzymes finds wide application in a variety of enzyme catalyzed reaction, for example, in processes for the production of L-amino acids.

## EXAMPLE 1

To 25.0g of Silica-PrSi-PEI (40μ, 2.8% N, 0.05 meg) in a reaction vessel, 13.0g (0.128 mol) of triethylamine was added along with 100 ml of chloroform 27.6g (0.115 ml) of cyanuric chloride was added at about 20°C. The reaction was very exothermic. Additional 200 mol of chloroform was added and the mixture was stirred at about 20°C for about 5½ hours, filtered, washed 3 x 200 ml chloroform and dried at about 80° C for about 4 hours. Yield = 26.2g. Analysis: C = 10.74%; H = 2.11%; N = 6.32%; Cl = 5.52%.

## EXAMPLE 2

300 ml of chloroform was placed in a reaction vessel fitted with a thermometer, a stirrer and a condenser and was cooled to about 0-5°C by means of ice and salt. 27.6g (0.15 mol) of cyanuric chloride was added during 20 minutes while maintaining the temperature between 0-5°C. Then 15.0g (0.15 mol) of triethylamine was added in one shot and the suspension turned yellow and the temperature rose to about 25°C. The solution was then cooled again to 0-5°C and 25.0g of Silica-PrSi-PEI (40μ, 2.8% N, 0.05 meg) was added to small lots during about a 20 minutes interval while maintaining the temperature 0-5°C. The reaction mixture was stirred at that temperature for about 30 minutes after which the ice bath was removed and the mixture was stirred for about 22 hours, filtered, washed 3 x 100 ml chloroform and then dried at about 0°C for about 4 hours. Yield = 25.4g. Analysis: C = 10.22%; H = 2.12%; N = 5.78%; Cl = 5.59%.

## EXAMPLE 3

25g of Silica-PrSi-PEI (40μ, 2.8% N, 0.05 meg) was suspended in 100 ml of chloroform, to which 15.0g (0.15 mol) of triethylamine was added. 28.0g of triazine was slurried with 200 ml of chloroform and transferred to the reaction vessel with a very exothermic reaction occurring. The mixture was stirred for about 5½ hours at about 20°C, filtered, washed 3 x 100 ml chloroform and dried at about 80°C for about 4 hours. Yield = 26g. Analysis: C= 10.95%; H = 2.12%; N = 5.96%; Cl = 5.63%.

## EXAMPLE 4

In a reaction vessel 50.0g of Silica-PrSi-PEI (40μ, 2.8% N, 0.05 meg) was suspended in 200 ml of chloroform to which 29.0g of triethylamine was added. 20.0g of cyanuric chloride was gradually added and the rest of the cyanuric chloride was slurried with 200 ml of chloroform and was transferred to the reaction vessel with a very exothermic reaction occurring. The mixture was stirred for about 5½ hours at about 20°C, filtered, washed 3 x 200 ml chloroform, dried at about 80°C for about 4 hours. Yield = 51g. Analysis: C =10.71%; H =2.14%; N = 5.88%; Cl = 5.33%.

EXAMPLE 5

400 ml of chloroform was suspended in a reaction vessel fitted with a condenser, stirrer and a thermometer and was cooled down to 0-5°C by means of ice and salt. 56 g (0.29 mol) of cyanuric chloride was added to the cooled chloroform solution during about 15-20 minutes while maintaining the temperature at 0-5°C. 36g (0.35 mol) of triethylamine in 50 ml of chloroform was added dropwise during about 30 minutes keeping the temperature under about 10°C. The solution turned yellow after the addition of triethylamine was complete. The mixture was cooled to 0-5°C and 50.0g of Silica-PrSi-PEI-triazine, produced according to Example 4, was added while keeping the temperature under about 10°C. The addition of silica was complete in about 10 minutes. The reaction mixture was stirred at that temperature for about 10 minutes after which the ice bath was removed and the mixture was stirred at about 20°C for about 18½ hours, filtered, washed with 4 x 250 ml chloroform and dried at about 80°C for about 4 hours. Yield = 49g. Analysis: C = 11.3%; H = 2.25%; N = 6.31%; Cl = 4.86%.

EXAMPLE 6

In a reaction vessel 250g Silica-PrSi-PEI (40μ, 2.8% N, 0.05 meg) and 100 ml 25% glutaraldehyde solution were mixed. The mixture was kept on a shaker for about 4 hours at about 20°C. The mixture turned light brown, was filtered after about 4 hours, washed 3 x 100 ml deionized water, 3 x 100 ml methanol and 3 x 100 ml acetone, dried at about 20°C in a vacuum oven overnight to a constant weight. Yield = 26g. Analysis: C = 15.43%; H = 2.48%; N = 2.34%.

EXAMPLE 7

25 g of Silica-PrSi-PEI (40μ, 2.8% N, 0.05 meg) was placed in a 500 ml round bottom flask and 5.1g (0.05 ml) triethylamine in 100 ml of tetrahydrofuran was added, followed by 10.15g (0.05 mol) p-nitrophenyl chloroformate and an additional 150 ml of tetrahydrofuran. The mixture was kept on a shaker for about 16 hours at about 20°C, then filtered, washed with 4 x 125 ml chloroform and dried at about 80°C for about 4 hours. Yield = 26g. Analysis: C = 9.73%, H = 2.51%; N = 3.26%.

EXAMPLE 8

25g of Silica-PrSi-PEI (40μ, 2.8% N, 0.05 meg) was suspended in 250 ml of tetrahydrofuran and 10.12g (0.1 mol) of triethylamine was added followed by 9.32 (0.01 mol) of epichlorohydrin. The mixture was kept on a shaker for about 19 hours at 20°C, then filtered, washed 2 x 250 ml tetrahydrofuran, 2 x 250 ml chloroform and 2 x 250 ml acetone and dried at about 80°C for about 4 hours. Yield = 25.5g. Analysis: C = 7.84%; H = 1.61%; N = 2.63%.

EXAMPLE 9

In a reaction vessel 25 g of Silica-PrSi-PEI (40μ, 2.86% N, 0.05 meg) was suspended in 250 ml of tetrahydrofuran and 11.25g (0.055 mol) of 1,4 butanediol glycidyl ether was added. The mixture was placed on a shaker for about 8 hours at about 20°C, then filtered, washed 3 x 100 ml methanol and dried at about 80°C for about 4 hours. Analysis: C = 7.09%; H = 1.62%; N =2.36%.

EXAMPLE 10

Example 9 was repeated except the product was washed with 3 x 100 ml acetone and 3 x 100 ml diethyl ether. Analysis: C = 7.13%; H = 1.61%; N = 2.75%.

EXAMPLE 11

10g (0.061 ml) of 1-1′-carbonyldiimidazole was suspended in 150 ml of acetone and the suspension was added to 25 g of Silica-PrSi-PEI (40 μ, 2.8% N, 0.05 meg) in a reaction vessel. An additional 100 ml of acetone was added to the reaction vessel and it was kept on rotary film evaporator for about 18 hours at about 30°C. The product was filtered, washed 3 x 250 ml acetone, 1 x 250 mol diethylether and dried at about 80°C for about 4 hours. Yield = 26g. Analysis: C = 8.99%; H = 1.72%; N = 3.98%.

EXAMPLE 12

25 g of Silica-PrSi-PEI (C = 5.92%, H = 2.82%, 0.05 meg) was suspended in 125 ml of tetrahydrofuran and 5.05g (0.05 mol) of triethylamine was added and the reaction mixture was stirred at about 20°C for about 10 minutes after which 6.12g (0.05 mol) of ethylchloroacetate was added and followed by 125 ml of tetrahydrofuran. The reaction mixture was stirred at about 20°C on a shaker for about 24 hours then filtered, washed 2 x 250 ml chloroform, 2 x 250 ml acetone and dried at about 80°C for about 4 hours. Analysis: C = 6.61%; H = 1.67%, N= 2.80%.

EXAMPLE 13

2.5g (0.013 ml) of 1-(3-dimethylaminopropyl)-3-ethylcarbodiimide hydrochloride was dissolved in 50 ml of acetone:2-propanol (1:1). 1'3g (0.011 mol) of N-hydroxysuccinimide was suspended in 100 ml of acetone and kept on a shaker (this did not go completely in solution). 25 g of succinoylated Silica-PrSi-PEI (C = 11.89%, H = 1.86%, N = 2.69%, carboxyl group = 0.95 meg/g) was placed in a reaction vessel and the solution of 1-(3-dimethylaminopropyl)-3-ethylcarbodiimide hydrochloride in acetone-2-propanol was added. The reaction vessel was shaken for about 5 minutes, then the solution of N-hydroxy succinimide in acetone was added followed by 25 ml of 2-propanol. The reaction vessel was kept on a shaker for about 22 hours then the product was filtered, washed 2 x 250 ml isopropanol, 2 x 250 ml acetone and dried at about 80°C for about 4 hours. Yield = 26.4g. Analysis: C = 13.60%; H = 2.14%, N = 3.38%.

EXAMPLE 14

Preparation of diazo affinity chromatography matrixes according to this invention can be prepared according to the following procedures.

A) Silica-PrSi-PEI is reacted with p-nitrobenzaldehyde in methanol and the resulting product reacted with sodium borohydride in methanol. The product is suspended in sodium dithionite solution at about 60°C. The resulting product is reacted with ice cold $HBF_4$ and the product is filtered, washed with ice water and dried under vacuum to yield the desired diazonium fluoborate product:

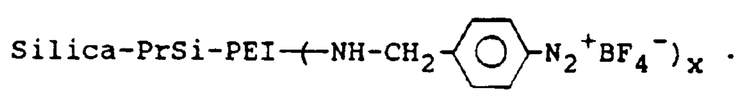

B) Silica-PrSi-PEI is reacted with p-nitrobenzoyl chloride in tetrahydrofuran and triethylamine and the resulting product is suspended in a sodium dithionite solution followed by treatment of the reaction product with ice cold $HBF_4$, filtering, washing with ice water and drying of the product under vacuum to yield the desired diazonium fluoborate product:

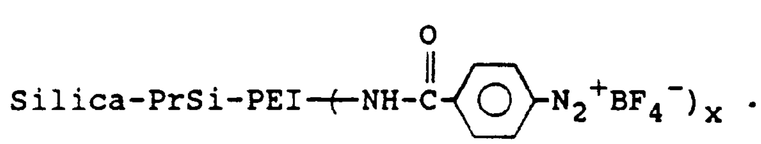

EXAMPLE 15

10 g of Glutaraldehyde PEI-Silica Gel affinity matrix, produced according to Example 6, was washed with 0.1M phosphate (pH 8.0) until the pH of the effluent was equal to the pH of the wash (equilibration) buffer. 20.0 ml of 25 mg/ml Human IgG solution (in 0.1M phosphate buffer, pH 8.0) was added to the affinity matrix. A concentrated protein solution was used in order to keep reaction volume small and the reaction was allowed to proceed overnight at 4°C. The affinity matrix was washed with the following sequence of buffers in order to remove non-covalently bound material: 0.1M phosphate, 0.1M phosphate + 1.0M NaCl, 0.1M phosphate. The pH of all buffers were adjusted to 8.0. The affinity matrix was then washed with 0.2M ethanolamine (pH 8.0), to cap unreacted sites, for 1-3 hours at 4°C. The affinity matrix was then equilibrated with 0.1M phosphate, pH 7.0. The affinity matrix was stored at 4°C; 0.1% sodium azide was added as a preservative. 96% of the immunoglobulin protein was immobilized as determined by analyzing, by reversed phase HPLC, the quantity of immunoglobulin protein remaining in solution. Immobilized antibody was immunologically active as determined by retention of its specific antigen somatrotropin when this peptide in solution was passed over a packed column of the antibody affinity matrix. Structurally unrelated peptides were not retained by the column.

EXAMPLE 16

5g of Glutaraldehyde PEI-Silica Gel affinity matrix, produced according to Example 6, was washed with 0.1M acetate (pH 8.7) until the pH of effluent was equal to the pH of the wash (equilibration) buffer. 10 ml of 30 mg/ml chymotrypsin solution (in 0.1M acetate buffer, pH 8.7) was added to the affinity matrix. A concentrated protein solution was used in order to keep the reaction volume small and the reaction was allowed to proceed overnight at 5°C. The affinity matrix was washed with 0.1M acetate buffer pH 7.0 in order to remove non-covalently bound material. The affinity matrix was stored at 4°C dry or in acetate buffer (pH 7.0) : 2-propanol (9:1). 90% of the enzyme was immobilized as determined by analyzing, by reversed phase HPLC, the quantity of enzyme protein remaining in solution. The immobilized enzyme was packed into a glass column and was used as a chromatographic matrix to chromatograph amino acids and amino acid derivatives.

EXAMPLE 17

50 mg of Glutaraldehyde PEI-Silica Gel affinity matrix, produced according to Example 6, was washed with 0.05-0.1M phosphate (pH 7.5-8.5) until pH of effluent was equal to the pH of the wash (equilibration) buffer. 2.0 ml of 0.5 mg/ml galactose oxidase solution (in 0.05-0.1M phosphate or borate buffer, pH 7.5-8.5) was added to affinity matrix. A concentrated protein solution was used in order to keep the reaction volume small and the reaction was allowed to proceed overnight at 4°C. The affinity matrix was washed with the following sequence of buffers in order to remove non-covalently bound material: 0.1M phosphate, 0.1M phosphate + 1.0M NaCl, 0.1M phosphate, the pH of all buffers were adjusted to 8.05. The affinity matrix was then washed with 0.2M ethanolamine or tris (pH 8.0), to cap unreacted sites, for 1-3 hours at 4°C. The affinity matrix was then equilibrated with 0.1M phosphate, pH 7.0. The affinity matrix was stored at 4°C. 98% of the enzyme was immobilized as determined by analyzing, by reversed phase HPLC, the quantity of enzyme protein remaining in solution. Immobilized enzyme was active as determined by a colorimetric oxidation-reduction reaction utilizing o-dianisidine.

EXAMPLE 18

Triazine PEI-Silica Gel affinity matrix, produced according to Example 3, was washed with 0.1M phosphate (pH 7.5) until the pH of effluent equilibrated to the pH of the wash buffer. 2.5 ml of a 1 mg/ml peroxidase solution (in 0.1M phosphate buffer, pH 7.5) was added to affinity matrix and allowed to react at room temperature for 4 hours. The affinity matrix was washed with the following sequence of buffers in order to remove non-covalently bound material: 0.1M phosphate, 0.1M phosphate + 1.0M NaCl, 0.1M phosphate. A pH of 8.0 was used for all buffers . The affinity matrix was then washed with 0.2M ethanolamine (pH 8.0) for 1-3 hours at room temperature to cap unreacted sites. Then the affinity matrix was equilibrated with 0.1M phosphate, pH 7.0. The affinity matrix was stored at 4°C. The immobilization process was followed by monitoring the absorbance at 280 nm of the supernatant from the reaction suspension. 54% of the enzyme in solution was absorbed. The immobilized enzyme exhibited 55% of the activity of an equivalent amount of soluble enzyme.

EXAMPLE 19

50 mg of Glutaraldehyde PEI Silica Gel affinity matrix was thoroughly washed with 0.1M phosphate buffer, pH 8 and equilibrated in the same buffer. 2.5 ml of a 0.8 mg/ml solution of β-galactosidase was added to the affinity matrix suspension and the rate of immobilization was followed by monitoring the absorbance at 280 nm of the supernatant. After 20 hours at 4°C 73% of the enzyme was bound to the matrix, and exhibited 40% of the specific activity of soluble enzyme.

## Claims

1. A solid phase support selected from the group consisting of:
(a) a support of the general formula

$$\text{Silica-PrSi-PEI}\!-\!(R)_x$$

wherein Silica-PrSi-PEI is a covalently bound, non-crosslinked polyethyleneimine bonded phase solid support which is the reaction product of (1) a) particulate silica gel having an average particle diameter of from about 1 to 200 micrometres and an average pore size of from 0 to 100 nm (0 to 1000 Angstrom units), or b) particulate controlled pore glass having an average particle diameter of from 1 to 200 micrometres and an average pore size of from 0 to 100 nm (0 to 1000 Angstrom units), with (2) polyethyleneiminopropyl trimethoxy silane having an average molecular weight of from 400 to 1800, or

(b) the weakly acidic carboxylated product of the Silica-PrSi-PEI solid support with a dibasic acid anhydride, said carboxylated product containing from 0.3 to 1.2 carboxyl milliequivalents per gram,

and wherein R in the case of the non-weakly acidic carboxylated support is the residue of any chemically reactive moiety capable of undergoing nucleophilic substitution at two separate sites, such that R becomes covalently linked to the primary or secondary amino groups of the PEI at one such site while having the other site available and reactive for subsequent nucleophilic substitution under non-denaturing conditions by an affinity chromatography ligand to form a second covalent bond stable under aqueous hydrolytic buffer conditions and x is a positive integer less than or equal to the total number of primary or secondary amino groups in the PEI moiety, and in the case of the weakly acidic carboxylated support R is the residue of any chemically reactive moiety capable of facilitated nucleophilic displacement of the carboxyl hydroxyl to form a covalent bond at the carboxyl carbon, creating thereby a sufficiently electrophilic site, so as to be readily displaced at the carboxyl carbon by a nucleophilic functional group on an affinity chromatography ligand, and x is a positive integer less than or equal to the total number of carboxyl groups in the carboxylated PEI moiety.

2. A solid phase support of claim 1, wherein the silica gel has an average particle diameter of 3 to 70 microns and an average pore size of 5 to 100 nm (50 to 1000 Angstrom units).

3. A solid-phase support of claim 1 or claim 2, wherein R is selected from

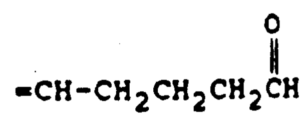 , 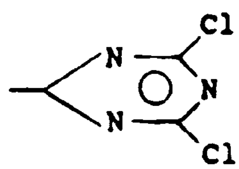 , 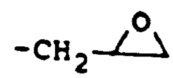 ,

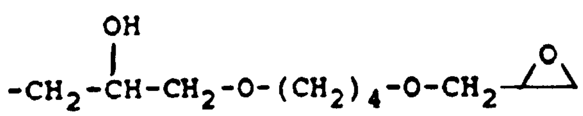 , 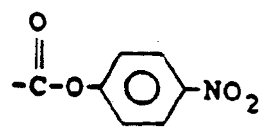 ,

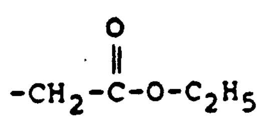 , 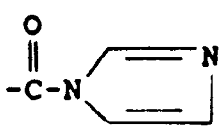 , 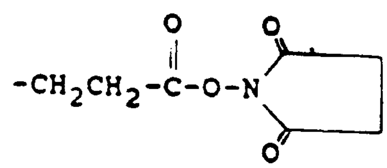

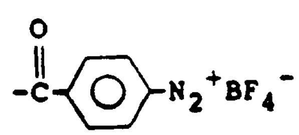 and 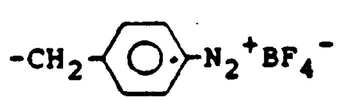 .

4. An immobilised solid-phase enzyme, comprising the enzyme immobilised on an affinity chromatography matrix solid-phase support, wherein the solid-phase support is as defined in any preceding claim.

5. A ligand-bound chromatography affinity matrix, wherein the affinity matrix is selected from a support (a) and a product (b) as defined in any of claims 1 to 3.

6. A method of separating or purifying a substance from solution by binding the substance in solution with an affinity matrix having a ligand for the substance covalently bound to the affinity matrix, wherein the affinity matrix is a solid-phase support of any of claims 1 to 3.

## Patentansprüche

1. Festphasenträger gewählt aus der Gruppe bestehend aus:

(a) einem Träger der allgemeinen Formel

$$\text{Silica-PrSi-PEI}\{(R)_x,$$

worin Silica-PrSi-PEI ein kovalent gebundener, nicht quervernetzter Polyethylenimin gebundener Festphasenträger ist, welcher das Reaktionsprodukt von (1) a) teilchenförmigem Silicagel mit einem mittleren Teilchendurchmesser von 1 bis 100 µm und einer mittleren Porengröße von 0 bis 100 nm (0 bis 100 Angström) oder b) teilchenförmigen kontrollierten Porenglas mit einem mittleren Teilchendurchmesser von 1 bis 100 µm und einer mittleren Porengröße von 0 bis 100 nm (0 bis 100 Angström) mit (2) Polyethyleniminopropyltrimethoxysilan, welches ein mittleres Molekulargewicht von 400 bis 1800 aufweist, ist oder

(b) dem schwach sauren carboxylierten Produkt des festen Silica-PrSi-PEI Trägers mit einem dibasigen Säureanhydrid, wobei das carboxylierte Produkt von 0,3 bis 1,2 Carboxyl-Milliäquivalente pro Gramm enthält

und worin R im Fall des nicht-schwach sauren carboxylierten Trägers der Rest von jeder chemisch reaktiven Einheit ist, welche fähig ist, eine nukleophile Substituenten an zwei unterschiedlichen Stellen einzugehen, so daß R an einer derartigen Stelle kovalent an die primären oder sekundären Aminogruppen des PEI gebunden wird, wohingegen die andere Stelle für eine folgende nukleophile Substitution unter nicht-denaturierende Bedingungen mit einem Affinitätschromatographieligand verfügbar und reaktiv bleibt, um eine zweite kovalente Bindung zu bilden, welche unter wäßrigen hydrolytischen Pufferbedingungen stabil ist und X eine positive ganze Zahl bedeutet, welche kleiner oder gleich der Gesamtzahl von primären oder sekundären Aminogruppen in der PEI-Einheit ist und im Fall des schwach sauren carboxylierten Trägers R der Rest von jeder chemisch reaktiven Einheit ist, welche zur leichten nukleophilen Verlagerung der Hydroxylgruppe des Carboxyl fähig ist, um eine kovalente Bindung an dem Carboxyl-Kohlenstoff zu bilden, wobei eine ausreichend elektrophile Stelle gebildet wird, so daß sie leicht an den Carboxyl-Kohlenstoff mit einer nukleophilen funktionellen Gruppe auf einem Affinitätschromatographieliganden verlagert werden kann und X eine positive ganze Zahl bedeutet, welche kleiner oder gleich der Gesamtzahl der Carboxylgruppen in der carboxylierten PEI-Einheit ist.

2. Festphasenträger nach Anspruch 1, worin das Silicagel einen mittleren Teilchendurchmesser von 3 bis 70 µm und eine mittlere Porengröße von 5 bis 100 nm (50 bis 1000 Angström) aufweist.

3. Festphasenträger nach Anspruch 1 oder 2, worin R aus

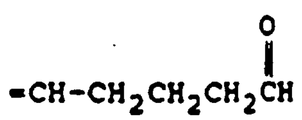 , 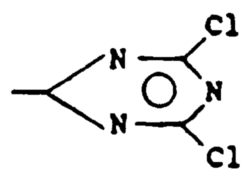 , 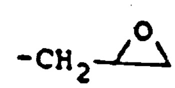 ,

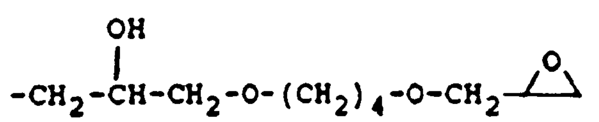 , 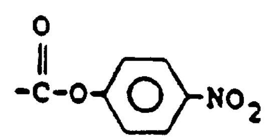 ,

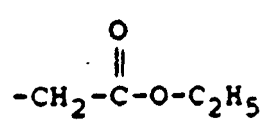 , 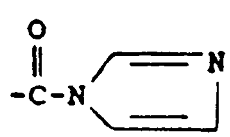 , 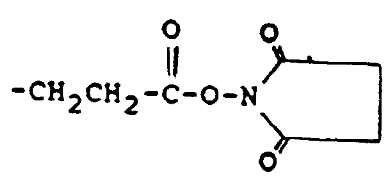

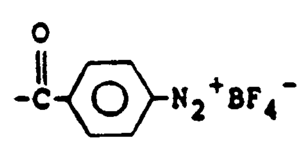 und 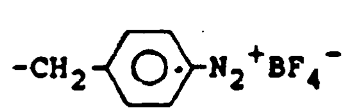 .

gewählt ist.

4. Immobilisiertes Festphasenenzym, umfassend das Enzym immobilisiert auf einem Affinitätschromatographiematrix-Festphasenträger, worin der Festphasenträger wie in einem der vorhergehenden Ansprüche definiert ist.

5. Ligandengebundene Affinitätschromatograpiematrix, worin die Affinitätsmatrix aus einem Träger (a) und einem Produkt (b) wie in den Ansprüchen 1 bis 3 definiert, gewählt ist.

6. Verfahren zum Abtrennen oder Reinigen einer Substanz aus einer Lösung durch Binden der Substanz in Lösung mit einer Affinitätsmatrix, welche einen Lignaden für die Substanz kovalent an die Affinitätsmatrix gebunden aufweist, worin die Affinitätsmatrix ein Festphasenträger nach einem der Ansprüche 1 bis 3 ist.

## Revendications

1. Un support en phase solide choisi parmi:

(a) un support de formule générale :

$$\text{Silice-PrSi-PEI}\!-\!\!(\text{R})_x$$

dans laquelle silice-PrSi-PEI est un support en phase solide liée par covalence à une polyéthylèneimine non réticulée qui est le produit de réaction de (1) a) un gel de silice en particules ayant un diamètre moyen de particules de 1 à 200 μm et une dimension moyenne de pores de 0 à 100 nm (0 à 1 000 Å) ou b) un verre en particules à pores contrôlés ayant un diamètre moyen de particules de 1 à 200 μm et une dimension moyenne de pores de 0 à 100 nm (0 à 1 000 Å) avec (2) un polyéthylèneiminopropyltriméthoxysilane ayant un poids moléculaire de 400 à 1 800, ou

(b) Le produit de carboxylation faiblement acide du support solide silice-PrSi-PEI par un anhydride de diacide, ledit produit de carboxylation contenant de 0,3 à 1,2 méq. carboxyle par gramme,

et dans laquelle R dans le cas du support non carboxylé faiblement acide est le résidu d'un fragment chimiquement réactif quelconque capable de subir une substitution nucléophile sur deux centres séparés, de sorte que R soit lié par covalence aux groupes amino primaires ou secondaires de la PEI sur l'un de ces centres, tandis que l'autre centre est disponible et réactif pour une substitution nucléophile subséquente dans des conditions non dénaturantes par un ligand de chromatographie d'affinité pour former une seconde liaison covalente stable dans des conditions de tampon hydrolytique aqueux et x est un entier inférieur ou égal au nombre total de groupes amino primaires ou secondaires dans le fragment PEI, et dans le cas du support carboxylé faiblement acide, R est le résidu d'un fragment chimiquement réactif quelconque capable de déplacement nucléophile facilité de l'hydroxyle du carboxyle pour former une liaison covalente sur le carbone du carboxyle, en créant ainsi un centre suffisamment électrophile, de manière à être facilement déplacé sur le carbone du carboxyle par un groupe fonctionnel nucléophile sur un ligand de chromatographie d'affinité et x est un entier positif inférieur ou égal au nombre total de groupes carboxyles dans le fragment PEI carboxylé.

2. Un support en phase solide selon la revendication 1, dans lequel le gel de silice a un diamètre moyen de particules de 3 à 70 μm et une dimension moyenne de pores de 5 à 100 nm (50 à 1 000 Å).

3. Un support en phase solide selon la revendication 1 ou 2, dans lequel R est choisi parmi

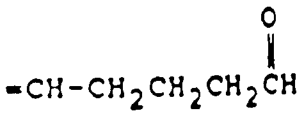 , 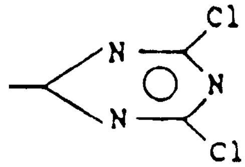 , 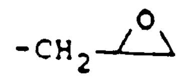 ,

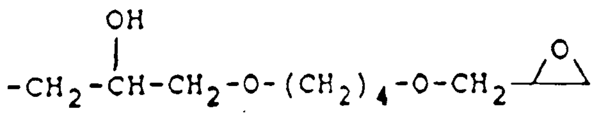 , 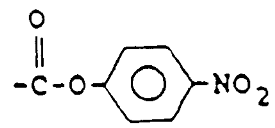 ,

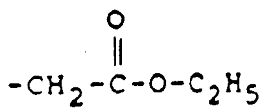 , 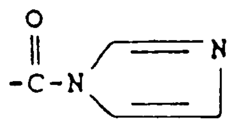 , 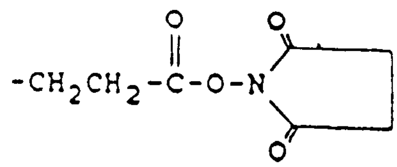

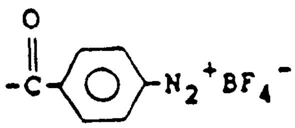 et 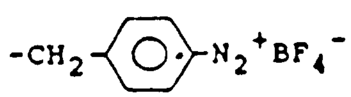 .

4. Une enzyme immobilisée en phase solide, comprenant l'enzyme immobilisée sur un support en phase solide de matrice de chromatographie d'affinité, dans laquelle le support en phase solide est tel que défini dans l'une quelconque des revendications précédentes.

5. Une matrice d'affinité de chromatographie liée à un ligand, dans laquelle la matrice d'affinité est choisie parmi un support (a) et un produit (b) tel que défini dans l'une quelconque des revendications 1 à 3.

6. Un procédé de séparation ou de purification d'une substance d'une solution par fixation de la substance en solution par une matrice d'affinité ayant un ligand pour la substance lié par covalence à la matrice d'affinité, dans lequel la matrice d'affinité est un support en phase solide selon l'une quelconque des revendications 1 à 3.